# FASCICULE DE BREVET EUROPEEN

(11) **EP 0 899 917 B1**
(45) Date de publication et mention de la délivrance du brevet: **27.02.2008**
(21) Numéro de dépôt: 98402006.5
(22) Date de dépôt: 06.08.1998
(51) Int. Cl.: H04L 12/56

(54) **Dispositif et procédé de commutation de cellules ATM à groupes de connections, et fonctions terminales d'entrée et de sortie correspondantes**
Vorrichtung und Verfahren zur ATM-Gruppenvermittlung mit Zugehörigen Endfunktionen im Eingang und Ausgang
Aparatus and method for group switching ATM cells with corresponding terminating functionality at the input and output

(30) Priorité: 07.08.1997 FR 9710129
(43) Date de publication de la demande: 03.03.1999
(73) Titulaire: Alcatel Lucent, 75008 Paris (FR)
(72) Inventeur: Dieudonne, Marc, 91430 Igny (FR)
(74) Mandataire: Sciaux, Edmond

(56) Documents cités:
- EP-A- 0 446 492
- EP-A- 0 524 350
- WO-A-93/19550
- GB-A- 2 288 297
- US-A- 5 572 523
- YAMANAKA N ET AL: "PERFORMANCE EVALUATION OF AN ATM CONNECTION WITH SEVERAL CELL FLOW COMPONENTS" IEICE TRANSACTIONS ON COMMUNICATIONS, vol. E79-B, no. 5, 1 mai 1996, pages 716-718, XP000598781
- WEN-TSUEN CHEN ET AL: "A FEASIBLE FRAMEWORK OF TRAFFIC CONTROL ON AN ATM WIDE-AREA NETWORK" COMPUTER NETWORKS AND ISDN SYSTEMS, vol. 27, no. 1, octobre 1994, pages 67-83, XP000468897

## Description

Le domaine de l'invention est celui de la transmission de données numériques. Plus précisément, l'invention concerne la commutation de cellules ATM ("Asynchronous Transmission Mode", ou Mode de Transmission Asynchrone) entre une pluralité de voies entrantes et une pluralité de voies sortantes.

Le principe général de la transmission ATM est bien connu, et de nombreuses techniques et architectures de commutation ont été présentées. Classiquement, un noeud de commutation ATM comprend :
- un étage d'entrée, comprenant plusieurs fonctions terminales d'entrée, recevant chacune des données de communications (cellules) sur plusieurs voies entrantes ;
- un ou plusieurs étages de commutation, formés de matrices de commutation ;
- un étage de sortie, comprenant plusieurs fonctions terminales de sortie, distribuant chacune des cellules sur plusieurs voies sortantes,
le tout étant organisé de façon que toute cellule reçue sur l'une des voies entrantes puisse être dirigée vers toute voie sortante.

En général, la gestion de la commutation, c'est-à-dire le transfert, ou routage, des cellules vers la voie sortante voulue se fait "par connexion". En d'autres termes, pour chaque connexion, on définit et on repère un chemin de transfert dans les étages de commutation. A chaque point de connexion, on prévoit un marquage, qui indique le chemin à suivre pour chaque cellule identifiée par ses données de connexion.

Ces données de connexion sont classiquement le chemin virtuel ("VP", pour "virtual path") et/ou le circuit virtuel ("VC", pour "virtual circuit"). D'autres informations de routage peuvent également être utilisées pour les connexions ATM internes aux dispositifs de commutation.

La gestion de ces marquages met en oeuvre des opérations relativement complexes, à chaque nouvelle connexion et à chaque déconnexion. Ainsi, une connexion nouvelle suppose de rechercher un chemin disponible vers la voie sortante voulue, puis de marquer chaque intersection du chemin identifié des informations permettant de reconnaître l'origine et la destination de chaque cellule (VP/VC). De plus, elle suppose la présence de moyens de mémorisation importants à chaque intersection, pour associer les données de routage à chaque connexion. Par ailleurs, les normes actuelles prévoient la distinction entre plusieurs capacités de transfert ATM ("ATC", pour "ATM transfert capability") et entre plusieurs qualités de service ""QoS", pour "Quality of Service"). L'utilisateur peut choisir, dans son "contrat de trafic", I"'ATC" et le "QoS" qu'il désire.

Cette variété conduit, dans les noeuds de commutation actuel, à la mise en oeuvre de moyens spécifiques. Plus précisément, il est prévu de :
- séparer et commuter les différents trafics "ATC & QoS" dans des plans différents ;
- séparer et commuter les différents trafics "ATC & QoS" dans les mémoires tampons ("buffers") différents à chaque étage de commutation ; ou
- utiliser des protocoles internes, entre les points de commutation internes, basés sur des algorithmes et des paramètres différents.

Il apparaît clairement que ces différentes solutions sont complexes, tant sur le plan matériel que sur le plan logiciel. Elles sont donc coûteuses, en temps de traitement, en mémoire,...

Le document EP 0 524 350 décrit un dispositif de commutation de cellules ATM, comprenant des moyens de commutation interconnectant une pluralité de fonctions terminales d'entrée avec une pluralité de fonctions terminales de sortie, et comprenant des moyens de création de groupes de connexions ; l'ensemble des connexions d'un groupe de connexions étant issues d'une même fonction terminale d'entrée et étant destinées à au moins une même fonction terminale de sortie, chacune des cellules des connexions d'un groupe de connexions étant affectée du même identifiant de groupe de connexions pour le routage des cellules dans lesdits moyens de commutation.

Ce procédé de commutation ATM limite le nombre d'opérations à effectuer lors de l'établissement d'une connexion, notamment en ce qui concerne le marquage du chemin à l'intérieur du réseau de commutation. Il réduit la quantité de mémoire nécessaire, notamment dans les étages de commutation. On définit des groupes de connexions (GoC), de façon à traiter de la même façon, dans les moyens de commutation, plusieurs connexions distinctes, dès lors qu'elles doivent être dirigées vers la (ou les) même fonction terminale de sortie. De cette façon, le marquage dans les étages de commutation est très simplifié, et établi une fois pour toute lors de l'établissement du "GoC".

L' objectif de l'invention est de proposer un procédé et un dispositif qui permettent une vitesse et un rythme de délivrance des cellules optimisés, se rapprochant de la périodicité nominale de ces cellules.

Un autre objectif de l'invention est encore de simplifier les traitements spécifiques imposés par les différents "ATC" et "QoS".

Ces objectifs, ainsi que d'autres qui apparaîtront plus clairement par la suite, sont atteints à l'aide d'un dispositif de commutation de cellules ATM, du type comprenant des moyens de commutation interconnectant une pluralité de fonctions terminales d'entrée avec une pluralité de fonctions terminales de sortie, et comprenant des moyens de création de groupes de connexions ; l'ensemble des connexions d'un groupe de connexions étant issues d'une même fonction terminale d'entrée et étant destinées à au moins une même fonction terminale de sortie, chacune des cellules des connexions d'un groupe de connexions étant affectée du même identifiant de groupe de connexions pour le routage des cellules dans lesdits moyens de commutation ; **caractérisé** en ce que chacune desdites fonctions terminales d'entrée et desdites fonctions terminales de sortie comprend, pour chacun desdits groupes de connexions, des moyens d'espacement, rétablissant la périodicité nominale des cellules de chacune desdites connexions, ou établissant une périodicité globale pour l'ensemble du groupe.

Ces moyens d'espacement, connus en soi, mais classiquement appliqués à chaque connexion, s'avèrent ici beaucoup plus efficace, du fait du nombre important de cellules prises en compte dans chaque groupe de connexions.

De façon préférentielle, lesdites connexions correspondent à des connexions ATM internes et/ou à des connexions ATM externes, caractérisées par un chemin virtuel (VP) et/ou à un circuit virtuel (VC).

Avantageusement, lesdits moyens de création de groupes de connexion allouent à chaque groupe de connexions une bande passante supérieure à la bande passante strictement nécessaire audit groupe de connexions, lors de sa création. Cela permet de simplifier, voire de rendre transparent, la prise en compte d'une nouvelle connexion. En d'autres termes, lesdits moyens de création de groupes de connexions comprennent des moyens de marquage du chemin et/ou de réservation d'une bande passante nécessaire dans lesdits moyens de commutation, mis en oeuvre une seule fois pour chaque groupe de connexion, lors de la création de ce dernier, et une nouvelle connexion peut être ajoutée à tout moment à un groupe de connexions, sans marquage de chemin ni réservation de bande passante spécifique.

Selon un mode de réalisation préférentiel de l'invention, chacune desdites fonctions terminales d'entrée comprend des moyens de création de groupes de connexions et des moyens d'affectation à chaque cellule qu'il reçoit d'un identifiant de groupe de connexions, et chacune desdites fonctions terminales de sortie comprend des moyens de traitement des cellules reçues d'un groupe de connexions, de façon à associer à chaque cellule des informations nécessaires à la suite de son routage.

Ainsi, la gestion des "GoC" est transparente pour les moyens de commutation. Ces derniers ne prennent en compte que les identifiants de groupe de connexions (IGoC).

Préférentiellement, lesdits moyens de création de groupe de connexions regroupent dans un groupe de connexions des connexions présentant une même qualité de service (QoS) et/ou une même capacité de transfert ATM (ATC).

A nouveau, le fait que le nombre de "GoC" soit réduit, par rapport au nombre de connexions, permet d'optimiser la prise en compte des différents paramètres.

L'invention concerne également le procédé de commutation mis en oeuvre notamment par un dispositif tel que décrit ci-dessus. Un tel procédé assure la création de groupes de connexions, l'ensemble des connexions d'un groupe de connexions étant issues d'une même fonction terminale d'entrée et étant destinées à au moins une même fonction terminale de sortie, chacune des cellules des connexions d'un groupe de connexions étant affectée du même identifiant de groupe de connexions pour le routage des cellules dans lesdits moyens de commutation.

De façon avantageuse, ce procédé comprend les étapes suivantes :
- dans chacun desdites fonctions terminales d'entrée :
   - création de groupes de connexions ;
   - affectation à chaque cellule reçue d'un identifiant de groupe de connexions ;
- dans chacune desdites fonctions terminales de sortie :
   - traitement des cellules reçues d'un groupe de connexions, de façon à associer à chaque cellule des informations nécessaires à la suite de son routage ;
et est **caractérisé** en ce qu'il consiste en outre, pour chacun desdits groupes de connexions, à espacer les cellules en rétablissant la périodicité nominale des cellules de chacune desdites connexions, ou établissant une périodicité globale pour l'ensemble du groupe.

Préférentiellement, le procédé comprend une étape de marquage du chemin et/ou de réservation d'un bande passante nécessaire dans lesdits moyens de commutation, mise en oeuvre une seule fois pour chaque groupe de connexion, lors de la création de ce dernier, de façon qu'une nouvelle connexion puisse être ajoutée à tout moment à un groupe de connexions, sans marquage de chemin ni réservation de bande passante spécifique.

L'invention concerne encore les fonctions terminales d'entrée et de sortie d'un dispositif de commutation ATM, comprenant les éléments nécessaires à la mise en oeuvre de l'invention.

Ainsi, une fonction terminale d'entrée comprend notamment des moyens de création de groupes de connexions, l'ensemble des connexions d'un groupe de connexions étant issues d'une même fonction terminale d'entrée et étant destinées à au moins une même fonction terminale de sortie, chacune des cellules des connexions d'un groupe de connexions étant affectée du même identifiant de groupe de connexions pour le routage des cellules dans lesdits moyens de commutation ; **caractérisée** en ce qu'elle comprend, pour chacun desdits groupes de connexions, des moyens d'espacement, rétablissant la périodicité nominale des cellules de chacune desdites connexions, ou établissant une périodicité globale pour l'ensemble du groupe.

Une fonction terminale de sortie comprend en particulier quant à elle des moyens de traitement des cellules reçues d'un groupe de connexions, de façon à associer à chaque cellule des informations nécessaires à la suite de la communication ; et est **caractérisée** en ce qu'elle comprend, pour chacun desdits groupes de connexions, des moyens d'espacement, rétablissant la périodicité nominale des cellules de chacune desdites connexions, ou établissant une périodicité globale pour l'ensemble du groupe.

D'autres caractéristiques et avantages de l'invention apparaîtront plus clairement à la lecture de la description suivante d'un mode de réalisation préférentiel, donné à titre de simple exemple illustratif et non limitatif, et des dessins annexés, dans lesquels :
- la figure 1 présente le principe fonctionnel d'un dispositif selon l'invention ;
- la figure 2 illustre les traductions effectuées pour le transfert des cellules dans un dispositif de commutation, d'une part selon l'art antérieur ("VP" ou "VC"), et d'autre part selon la technique de l'invention.

Comme déjà indiqué, l'invention repose sur la mise en oeuvre de groupes de connexions, dans un réseau de commutation ATM. Schématiquement, un groupe de connexion peut être considéré comme un "tuyau" défini dans le réseau de commutation entre une fonction terminale d'entrée et une, ou plusieurs, fonction terminale de sortie. Ce "tuyau" est défini de façon unique, par un marquage, dans le réseau de commutation.

Un groupe de connexion (GoC) peut correspondre à un ensemble de connexions ATM internes ou externes. Il est caractérisé par :
- ses points d'extrémité (fonction terminale d'entrée et fonction terminale de sortie) ;
- l'ensemble de connexions qu'il regroupe caractérisé par exemple par les "VCC" et/ou "VPC", ou de ses références de connexions internes ATM, ainsi que par ses caractéristiques de qualité de service (QoS) et sa capacité de transfert ATM (ATC) ;
- son mode de routage : mono-chemin, multi-chemin, et les techniques de sélection de chemins correspondante.

Pour mettre en oeuvre l'invention, il est donc nécessaire de définir un nouveau niveau d'identification des cellules, utilisées d'une part dans les liens internes du noeud ATM, entre les fonctions terminales, et d'autre part à la construction des liens des réseaux de communication externes, ou le multiplexage a lieu, pour les partages des chemins virtuels.

Ce nouveau niveau d'identification nécessite :
- dans la fonction terminale d'entrée : une traduction des identifiants de chemins et de circuits virtuels entrants en un identifiant de groupe de connexion interne : VCI-in VPI-in ---> IGoCI ;
- dans la fonction terminale de sortie :
   - une traduction : IGoCI ---> VCI-out, VPI-out, pour terminer le GoC interne;
   - une fonction de traduction VCI-out, VPI-out ---> identifiant de GoC externe (EGoCI), pour le partage de trafic sur les liens externes.

Bien sûr, l'invention peut n'être mise en oeuvre que sur des liens internes, ou que sur des liens externes.

Selon l'invention, dans l'étage d'entrée du commutateur ATM, on ajoute donc un identifiant de Goc interne (IGoCl) à l'en-tête de connexion. Cet IGoCl est utilisé comme identifiant de connexion :
- dans des moyens d'espacement, avant d'être introduits dans les moyens de commutation proprement dits ;
- dans chaque étage de commutation des moyens de commutation.

Cette technique présente notamment l'avantage que le trafic entrant de toute connexion est espacé à l'aide de moyens d'espacement, qui permettent de rétablir les cellules dans leur périodicité nominale. On optimise ainsi l'utilisation des ressources de matrices. L'espacement, réalisé soit par GoC interne soit individuellement par connexion, permet de considérer que le trafic est un trafic à débit binaire déterministe (DBR), défini par un débit de cellules de pic (PCR).

Dans ce cas de petites mémoires-tampons (buffers) peuvent être utilisées à tous les étages de commutation.

De plus, l'espacement d'un groupe de connexions internes est plus facile à mettre en oeuvre, du fait que le débit d'espacements est faible, et proche du débit de cellules moyen. Le rapport du débit de cellules moyen sur la déviation standard augmente avec les nombres de connexions.

Au niveau de la commutation, un ensemble de connexions individuel est remplacé par un "tuyau" ATM unique. En conséquence, le nombre de connexions individuel à commuter devient indépendant de la capacité de commutation du noeud ATM. En effet, ce dernier ne "voit" que les groupes de connexions.

En cas de défaillance interne, un re-routage interne rapide est possible, puisque seul le groupe de connexion est à re-router, et non un ensemble de connexions individuelles.

Par ailleurs, le contrat de trafic interne peut être réglé de façon globale, pour toutes les connexions appartenant à un groupe de connexions, et non plus connexion par connexion. Cela permet d'obtenir un temps de réaction de contrôle du trafic optimisé. Par exemple, dans une fonction terminale d'entrée (TU) seulement 512 groupes de connexions internes par ATC devron être gérés, dans la configuration large, alors qu'elle doit prendre en compte, selon les techniques classiques, jusqu'à 64000 connexions.

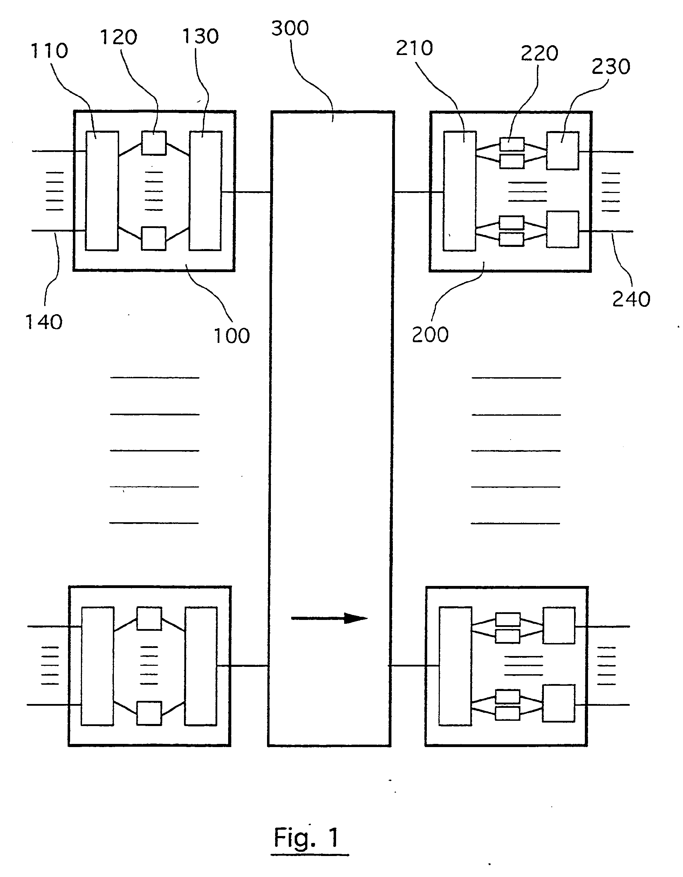

La **figure 1** illustre l'architecture fonctionnelle d'un dispositif selon l'invention. Ce dispositif comprend des moyens de commutation 300 classiques en eux-mêmes, mais adaptés pour les transferts des groupes de connexions. Ces moyens de connexion 300 interconnectent une pluralité de fonctions terminales d'entrée 100 avec une pluralité de fonctions terminales de sortie 200.

Chaque fonction terminale d'entrée est alimentée par plusieurs entrées VP/VC 140. Des moyens 110 de traduction ajoutent à chaque cellule un identifiant de groupe de connexions internes (IGoCI) à l'en-tête de chaque cellule.

Un ensemble de moyens d'espacement 120 assure l'espacement des cellules, pour chaque groupe de connexions internes, afin de régulariser le débit de cellules de chaque connexion, de façon à délivrer ces cellules à un débit proche de leur débit nominal, ou avec une périodicité globale pour l'ensemble du groupe. Ces moyens d'espacement délivrent les cellules à des moyens 130 de multiplexage de cellules sur un ou plusieurs liens des moyens de commutation 300.

Symétriquement, les cellules sont reçues dans les fonctions terminales de sortie 200, dans des moyens de traduction 210, qui assurent d'une part la traduction de l'identifiant de groupe de connexions internes en un identifiant de chemins et de circuits virtuels (VPI et VCI), et d'autre part la traduction en un identifiant de groupe de connexions externes.

Des moyens 220 d'espacement assurent l'homogénéisation du débit pour chaque GoC externe, en rétablissant la périodicité nominale des cellules de chacune desdites connexions, ou en établissant une périodicité globale pour l'ensemble du groupe. Ils alimentent respectivement des moyens de multiplexage 230 ou délivrent les flux correspondant au groupe de connexions externes sur les liens ATM de sortie 240.

De façon avantageuse, N groupes de connexions internes sont définis entre chaque fonction terminale d'entrée et chaque fonction terminale de sortie, N étant égal au nombre de capacités de transfert ATM (ATC) internes requises pour répondre à l'ensemble des ATC et QoS disponibles. Ces N groupes de connexions internes peuvent être créés logiquement lors de l'initialisation du système.

Le routage d'un groupe de connexions internes peut être défini sous la forme d'un ou plusieurs chemins physiques, avec la possibilité d'un choix en temps réel lors de l'initialisation de la connexion, par exemple en fonction de la commande d'admission d'appel (CAC) et/ou du mécanisme de gestion des blocages internes.

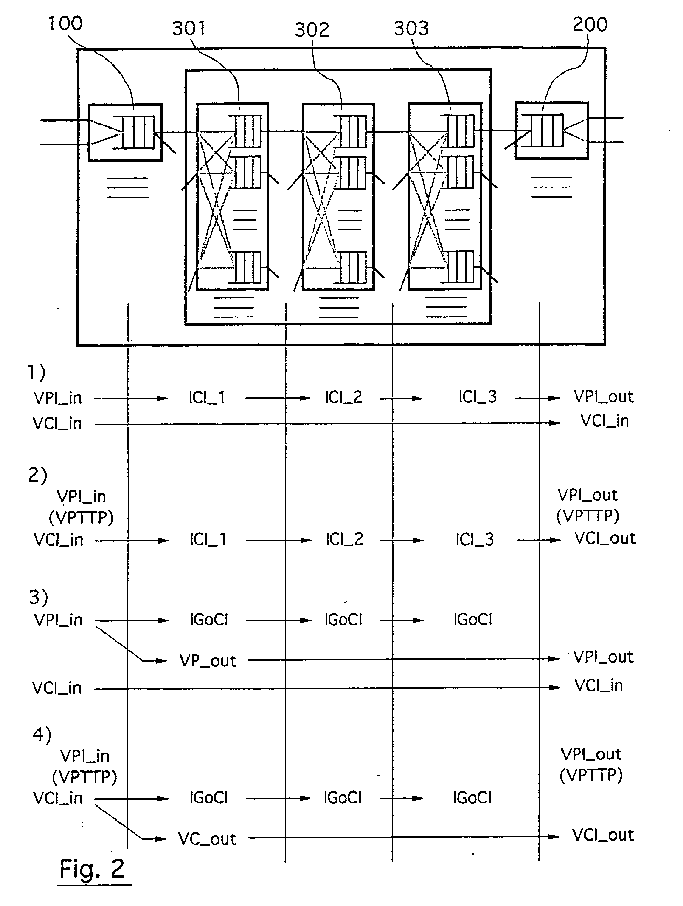

La **figure 2** donne un exemple d'implantation de l'invention, dans le cas d'un dispositif à 3 étages 301, 302 et 303 de commutation d'unités de transfert de circuit virtuel, et pour laquelle le champ VPI est utilisé pour la transmission de l'identifiant du groupe de connexions internes.

On présente respectivement sur ce schéma quatre situations, correspondant pour le deux premières à l'art antérieur, et pour les deux dernières à la présente invention :
1.) Cas d'une transmission classique par VPC : le VPI-in est traduit à chaque étage de commutation 301 à 303 en un identifiant de connexion interne ICI-1, ICI-2 puis ICI-3, puis en VPI-out dans l'étage de sortie. Le VCI-in est transmis de façon transparente, sans modification.
2.) Cas d'une transmission classique par VCC : le VCI-in est traduit à chaque étage de commutation 301 à 303 en un identifiant de connexion interne ICI-1, ICI-2 puis ICI-3, puis en VCI-out dans l'étage de sortie. Le VPI-in est transformé en VPI-out (technique VPTTP).
3.) Cas d'une transmission par VPC selon l'invention : le VPI-in est traduit pour l'ensemble des étages de commutation 301 à 303 en un identifiant unique de groupe de connexions interne IgoCl. Un VP-out est transmis en parallèle, pour donné le VPI-out dans l'étage de sortie. Le VCI-in est transmis de façon transparente, sans modification.
4.) Cas d'une transmission par VCC selon l'invention : le VCI-in est traduit pour l'ensemble des étages de commutation 301 à 303 en un identifiant unique de groupe de connexions interne IgoCl. Un VC-out est transmis en parallèle, pour donné le VCI-out dans l'étage de sortie. Le VPI-in est transformé en VPI-out (technique VPTTP).

## Revendications

1. Dispositif de commutation de cellules ATM, du type comprenant des moyens (300) de commutation interconnectant une pluralité de fonctions terminales d'entrée (100) avec une pluralité de fonctions terminales de sortie (200), et des moyens de création de groupes de connexions, l'ensemble des connexions d'un groupe de connexions étant issues d'une même fonction terminale d'entrée et étant destinées à au moins une même fonction terminale de sortie, chacune des cellules des connexions d'un groupe de connexions étant affectée (110) du même identifiant de groupe de connexions pour le routage des cellules dans lesdits moyens de commutation ;
**caractérisé en ce que** chacune desdites fonctions terminales d'entrée (100) et desdites fonctions terminales de sortie (200) comprend, pour chacun desdits groupes de connexions, des moyens (120, 220) d'espacement, rétablissant la périodicité nominale des cellules de chacune desdites connexions, ou établissant une périodicité globale pour l'ensemble du groupe.

2. Dispositif de commutation selon la revendication 1, **caractérisé en ce que** lesdites connexions correspondent à des connexions ATM internes et/ou à des connexions ATM externes **caractérisées par** un chemin virtuel et/ou à un circuit virtuel.

3. Dispositif de commutation selon l'une quelconque des revendications 1 et 2, **caractérisé en ce que** lesdits moyens de création de groupes de connexions allouent à chaque groupe de connexions une bande passante supérieure à la bande passante strictement nécessaire audit groupe de connexions, lors de sa création.

4. Dispositif de commutation selon l'une quelconque des revendications 1 à 3, **caractérisé en ce que** lesdits moyens de création de groupes de connexions comprennent des moyens de marquage du chemin et/ou de réservation d'une bande passante nécessaire dans lesdits moyens de commutation, mis en oeuvre une seule fois pour chaque groupe de connexion, lors de la création de ce dernier,
et **en ce qu'**une nouvelle connexion peut être ajoutée à tout moment à un groupe de connexions, sans marquage de chemin ni réservation de bande passante spécifique.

5. Dispositif de commutation selon l'une quelconque des revendications 1 à 4, **caractérisé en ce que** chacune desdites fonctions terminales d'entrée (100) comprend des moyens (110) de création de groupes de connexions et des moyens (110) d'affectation à chaque cellule qu'il reçoit d'un identifiant de groupe de connexions,
et **en ce que** chacune desdites fonctions terminales de sortie (100) comprend des moyens (210) de traitement des cellules reçues d'un groupe de connexions, de façon à associer à chaque cellule des informations nécessaires à la suite de son routage.

6. Dispositif de commutation selon l'une quelconque des revendications 1 à 5, **caractérisé en ce que** l'on regroupe dans un groupe de connexions des connexions présentant une même qualité de service et/ou une même capacité de transfert ATM.

7. Procédé de commutation de cellules ATM, du type permettant l'interconnexion entre une pluralité de fonctions terminales d'entrée (100) et une pluralité de fonctions terminales de sortie (200), par l'intermédiaire de moyens de commutation (300), consistant à assurer la création de groupes de connexions, l'ensemble des connexions d'un groupe de connexions étant issues d'une même fonction terminale d'entrée et étant destinées à au moins une même fonction terminale de sortie, chacune des cellules des connexions d'un groupe de connexions étant affectée du même identifiant de groupe de connexions pour le routage des cellules dans lesdits moyens de commutation ;
**caractérisé en ce qu'**il consiste en outre, pour chacun desdits groupes de connexions, à espacer les cellules en rétablissant la périodicité nominale des cellules de chacune desdites connexions, ou établissant une périodicité globale pour l'ensemble du groupe.

8. Procédé de commutation selon la revendication 7, **caractérisé en ce qu'**il comprend les étapes suivantes :
- dans chacun desdites fonctions terminales d'entrée :
- création de groupes de connexions ;
- affectation (110) à chaque cellule reçue d'un identifiant de groupe de connexions ;
- dans chacune desdites fonctions terminales de sortie traitement (210) des cellules reçues d'un groupe de connexions, de façon à associer à chaque cellule des informations nécessaires à la suite de son routage.

9. Procédé de commutation selon l'une quelconque des revendications 7 à 8, **caractérisé en ce qu'**il comprend une étape de marquage du chemin et/ou de réservation d'une bande passante nécessaire dans lesdits moyens de commutation, mise en oeuvre une seule fois pour chaque groupe de connexion, lors de la création de ce dernier,
et **en ce qu'**une nouvelle connexion peut être ajoutée à tout moment à un groupe de connexions, sans marquage de chemin ni réservation de bande passante spécifique.

10. Fonction terminale d'entrée d'un dispositif de commutation de cellules ATM, ledit dispositif de commutation comprenant des moyens de commutation interconnectant une pluralité de fonctions terminales d'entrée avec une pluralité de fonctions terminales de sortie, comprenant des moyens de création de groupes de connexions, l'ensemble des connexions d'un groupe de connexions étant issues d'une même fonction terminale d'entrée et étant destinées à au moins une même fonction terminale de sortie, chacune des cellules des connexions d'un groupe de connexions étant affectée du même identifiant de groupe de connexions pour le routage des cellules dans lesdits moyens de commutation ;
**caractérisée en ce qu'**elle comprend, pour chacun desdits groupes de connexions, des moyens (120) d'espacement, rétablissant la périodicité nominale des cellules de chacune desdites connexions, ou établissant une périodicité globale pour l'ensemble du groupe.

11. Fonction terminale de sortie d'un dispositif de commutation de cellules ATM, ledit dispositif de commutation comprenant :
- des moyens de commutation interconnectant une pluralité de fonctions terminales d'entrée avec une pluralité de fonctions terminales de sortie, et des moyens de création de groupes de connexions, l'ensemble des connexions d'un groupe de connexions étant issues d'une même fonction terminale d'entrée et étant destinées à au moins une même fonction terminale de sortie, et chacune des cellules des connexions d'un groupe de connexions étant affectée du même identifiant de groupe de connexions pour le routage des cellules dans lesdits moyens de commutation,
- et des moyens de traitement des cellules reçues d'un groupe de connexions, de façon à associer à chaque cellule des informations nécessaires à la suite de la communication,
**caractérisée en ce qu'**elle comprend, pour chacun desdits groupes de connexions, des moyens (220) d'espacement, rétablissant la périodicité nominale des cellules de chacune desdites connexions, ou établissant une périodicité globale pour l'ensemble du groupe.

## Claims

1. ATM cell switching device of the type comprising switching means (300) interconnecting a plurality of input terminal functions (100) with a plurality of output terminal functions (200) and means for creating groups of connections, all the connections of a group of connections coming from the same input terminal function and going to at least one common output terminal function, each of the connection cells of a group of connections being assigned (110) the same connection group identifier for routing cells in said switching means,
**characterised in that** each of said input terminal functions (100) and said output terminal functions (200) comprises, for each of said groups of connections, spacing means (120, 220) for re-establishing the nominal period of the cells of each of said connections or establishing a global period for all of the group.

2. Switching device according to claim 1, **characterised in that** said connections correspond to internal ATM connections and/or to external ATM connections **characterised by** a virtual path and/or a virtual circuit.

3. Switching device according to either claim 1 or claim 2, **characterised in that** said means for creating connection groups allocate to each connection group a bandwidth greater than the bandwidth strictly necessary to said connection group when it is created.

4. Switching device according to any of claims 1 to 3, **characterised in that** said means for creating connection groups comprise means for marking the path and/or for reserving a necessary bandwidth in said switching means, implemented once for each connection group when the latter is created, and **in that** a new connection can be added at any time to a connection group without path marking or reservation of specific bandwidth.

5. Switching device according to any of claims 1 to 4, **characterised in that** each of said input terminal functions (100) comprises means (110) for creating groups of connections and means (110) for allocating to each cell it receives a connection group identifier, and **in that** each of said output terminal functions (200) comprises means (210) for processing cells received from a group of connections to associate with each cell information necessary for its further routing.

6. Switching device according to any one of claims 1 to 5, **characterised in that** a connection group comprises connections having the same quality of service and/or the same ATM transfer capability.

7. Process for switching ATM cells of the type interconnecting a plurality of input terminal functions (100) and a plurality of output terminal functions (200) by means of switching means (300), consisting in creating connection groups, all the connections of a connection group coming from the same input terminal function and going to at least one common output terminal function, each of the connection cells of a connection group being allocated the same connection group identifier for the purposes of routing the cells in said switching means, said process being further **characterised in that** it consists in, for each of said connection groups, spacing the cells to re-establish the nominal period of the cells of each of said connections or establishing a global period for all of the group.

8. Switching process according to claim 7, **characterised in that** it comprises the following steps:
- in each of said input terminal functions:
- creating connection groups,
- assigning (110) to each cell received a connection group identifier,
- in each of said output terminal function processing cells received from a group of connections to associate with each cell information necessary for its further routing.

9. Switching process according to either of claims 7 and 8, **characterised in that** it comprises a step of path marking and/or reservation of a necessary bandwidth in said switching means implemented once only for each connection group when the latter is created, and
**in that** a new connection can be added at any time to a connection group without path marking or reservation of specific bandwidth.

10. An input terminal function of an ATM cell switching device, said switching device comprising switching means interconnecting a plurality of input terminal functions with a plurality of output terminal functions, comprising means for creating groups of connections, all of the connections of a group of connections coming from the same input terminal function and going to at least one common output terminal function, each of the connection cells of a group of connections being allocated the same connection group identifier for the purpose of routing cells in said switching means,
**characterised in that** said function comprises, for each of said connection groups, spacing means (120) for re-establishing the nominal period of the cells of each of said connections or establishing a global period for all of the group.

11. Output terminal function of an ATM cell switching device, said switching device comprising:
- switching means interconnecting a plurality of input terminal functions with a plurality of output terminal functions and means for creating groups of connections, all of the connections of a group of connections coming from the same input terminal function and going to at least one common output terminal function and each of the connection cells of a group of connections being allocated the same connection group identifier for the purpose of routing cells in said switching means, and
- means for processing cells received from a group of connections to associate with each cell information necessary for its further routing,
**characterised in that** said function comprises, for each of said connection groups, spacing means (220) for re-establishing the nominal period of the cells of each of said connections or establishing a global period for all of the group.

## Patentansprüche

1. Vorrichtung zur Vermittlung von ATM-Zellen, beinhaltend Vermittlungsmittel (300), die mehrere Eingangs-Endfunktionen (100) mit mehreren Ausgangs-Endfunktionen (200) verknüpfen, sowie Mittel zur Einrichtung von Verbindungsgruppen, wobei die Gesamtheit der Verbindungen einer Verbindungsgruppe aus ein und derselben Eingangs-Endfunktion stammt und für mindestens eine und dieselbe Ausgangs-Endfunktion bestimmt ist, und wobei jede Zelle der Verbindungen einer Verbindungsgruppe vom selben Verbindungsgruppen-Bezeichner für das Routing der Zellen in den besagten Vermittlungsmitteln bestimmt (110) wird,
**dadurch gekennzeichnet, dass** jede der besagten Eingangs-Endfunktionen (100) und der besagten Ausgangs-Endfunktionen (200) für jede der besagten Verbindungsgruppen Staffelungsmittel (120, 220) beinhaltet, welche die Nennperiodizität der Zellen jeder der besagten Verbindungen wiederherstellen oder eine globale Periodizität für die gesamte Gruppe herstellen.

2. Vermittlungsvorrichtung gemäß Anspruch 1, **dadurch gekennzeichnet, dass** die besagten Verbindungen internen ATM-Verbindungen und/oder externen ATM-Verbindungen entsprechen, die durch einen virtuellen Pfad und/oder einen virtuellen Kreis **gekennzeichnet** sind.

3. Vermittlungsvorrichtung gemäß einem oder beiden der Ansprüche 1 und 2, **dadurch gekennzeichnet, dass** die besagten Mittel zur Einrichtung von Verbindungsgruppen jeder Verbindungsgruppe bei deren Einrichtung einen Durchlassbereich zuordnen, der über dem für die besagte Verbindungsgruppe unbedingt notwendigen Durchlassbereich liegt.

4. Vermittlungsvorrichtung gemäß einem oder mehreren der Ansprüche 1 bis 3, **dadurch gekennzeichnet, dass** die besagten Mittel zur Einrichtung von Verbindungsgruppen Mittel zur Markierung des Pfades und/oder zur Reservierung eines in den besagten Vermittlungsmitteln erforderlichen Durchlassbereichs beinhalten, was für jede Verbindungsgruppe bei deren Einrichtung ein einziges Mal durchgeführt wird,
sowie **dadurch**, dass eine neue Verbindung jederzeit zu einer Verbindungsgruppe hinzugefügt werden kann, ohne dass dafür der Pfad markiert oder eine Reservierung eines bestimmten Durchlassbereichs vorgenommen zu werden braucht.

5. Vermittlungsvorrichtung gemäß einem oder mehreren der Ansprüche 1 bis 4, **dadurch gekennzeichnet, dass** jede der besagten Eingangs-Endfunktionen (100) Mittel (110) zur Einrichtung von Verbindungsgruppen und Mittel (110) zur Zuordnung eines Verbindungsgruppen-Bezeichners zu jeder von ihr empfangenen Zelle beinhaltet,
sowie **dadurch**, dass jede der besagten Ausgangs-Endfunktionen (200) Mittel (210) zur Verarbeitung der von einer Verbindungsgruppe empfangenen Zellen beinhaltet, bei welcher jeder Zelle Informationen hinzugefügt werden, die für ihr anschließendes Routing erforderlich sind.

6. Vermittlungsvorrichtung gemäß einem oder mehreren der Ansprüche 1 bis 5, **dadurch gekennzeichnet, dass** in einer Verbindungsgruppe solche Verbindungen zusammengefasst werden, die über dieselbe Dienstqualität und/oder dieselbe ATM-Transferkapazität verfügen.

7. Verfahren zur Vermittlung von ATM-Zellen, welches die Verknüpfung mehrerer Eingangs-Endfunktionen (100) und mehrerer Ausgangs-Endfunktionen (200) über Vermittlungsmittel (300) gestattet, darin bestehend, die Einrichtung von Verbindungsgruppen zu gewährleisten, wobei die Gesamtheit der Verbindungen einer Verbindungsgruppe aus ein und derselben Eingangs-Endfunktion stammt und für mindestens eine und dieselbe Ausgangs-Endfunktion bestimmt ist, und wobei jede Zelle der Verbindungen einer Verbindungsgruppe vom selben Verbindungsgruppen-Bezeichner für das Routing der Zellen in den besagten Vermittlungsmitteln bestimmt wird,
**dadurch gekennzeichnet, dass** es ferner darin besteht, für jede der besagten Verbindungsgruppen die Zellen zu staffeln, indem die Nennperiodizität der Zellen von jeder der besagten Verbindungen wiederhergestellt oder eine globale Periodizität für die gesamte Gruppe hergestellt wird.

8. Vermittlungsverfahren gemäß Anspruch 7, **dadurch gekennzeichnet, dass** es die Schritte beinhaltet,
- in jeder der besagten Eingangs-Endfunktionen
- Verbindungsgruppen einzurichten,
- jeder empfangenen Zelle einen Verbindungsgruppen-Bezeichner zuzuordnen (110) und
- in jeder der besagten Ausgangs-Endfunktionen eine Verarbeitung (210) der empfangenen Zellen einer Verbindungsgruppe dergestalt durchzuführen, dass jeder Zelle Informationen zugeordnet werden, die für ihr anschließendes Routing notwendig sind.

9. Vermittlungsverfahren gemäß einem oder beiden der Ansprüche 7 und 8, **dadurch gekennzeichnet, dass** es einen Schritt zur Markierung des Pfades und/oder zur Reservierung eines in den besagten Vermittlungsmitteln erforderlichen Durchlassbereichs beinhaltet, der für jede Verbindungsgruppe bei deren Einrichtung ein einziges Mal durchgeführt wird,
sowie **dadurch**, dass einer Verbindungsgruppe jederzeit eine neue Verbindung hinzugefügt werden kann, ohne dass dafür der Pfad markiert oder eine Reservierung eines bestimmten Durchlassbereichs vorgenommen zu werden braucht.

10. Eingangs-Endfunktion einer Vorrichtung zur Vermittlung von ATM-Zellen, wobei die besagte Vermittlungsvorrichtung Vermittlungsmittel, die mehrere Eingangs-Endfunktionen mit mehreren Ausgangs-Endfunktionen verknüpfen, und Mittel zur Einrichtung von Verbindungsgruppen beinhaltet, wobei die Gesamtheit der Verbindungen einer Verbindungsgruppe aus ein und derselben Eingangs-Endfunktion stammt und für mindestens eine und dieselbe Ausgangs-Endfunktion bestimmt ist, und wobei jede Zelle der Verbindungen einer Verbindungsgruppe vom selben Verbindungsgruppen-Bezeichner für das Routing der Zellen in den besagten Vermittlungsmitteln bestimmt wird,
**dadurch gekennzeichnet, dass** sie für jede der besagten Verbindungsgruppen Staffelungsmittel (120) beinhaltet, welche die Nennperiodizität der Zellen jeder der besagten Verbindungen wiederherstellen oder eine globale Periodizität für die gesamte Gruppe herstellen.

11. Ausgangs-Endfunktion einer Vorrichtung zur Vermittlung von ATM-Zellen, wobei die besagte Vorrichtung
- Vermittlungsmittel, die mehrere Eingangs-Endfunktionen mit mehreren Ausgangs-Endfunktionen verknüpfen, und Mittel zur Einrichtung von Verbindungsgruppen beinhaltet, wobei die Gesamtheit der Verbindungen einer Verbindungsgruppe aus ein und derselben Eingangs-Endfunktion stammt und für mindestens eine und dieselbe Ausgangs-Endfunktion bestimmt ist, und wobei jede Zelle der Verbindungen einer Verbindungsgruppe vom selben Verbindungsgruppen-Bezeichner für das Routing der Zellen in den besagten Vermittlungsmitteln bestimmt wird,
- sowie Mittel zur Verarbeitung der empfangenen Zellen einer Verbindungsgruppe beinhaltet, die dergestalt durchgeführt wird, dass jeder Zelle Informationen zugeordnet werden, die für ihr anschließendes Routing notwendig sind,
**dadurch gekennzeichnet, dass** sie für jede der besagten Verbindungsgruppen Staffelungsmittel (220) beinhaltet, welche die Nennperiodizität der Zellen jeder der besagten Verbindungen wiederherstellen oder eine globale Periodizität für die gesamte Gruppe herstellen.
